(19) Europäisches Patentamt
European Patent Office
Office européen des brevets

(11) Veröffentlichungsnummer: **0 615 997 A1**

# (12) EUROPÄISCHE PATENTANMELDUNG

(21) Anmeldenummer: **94103349.0**

(22) Anmeldetag: **05.03.94**

(51) Int. Cl.5: **C08G 69/26**, C08G 69/36, C08G 69/28

(30) Priorität: **16.03.93 DE 4308331**

(43) Veröffentlichungstag der Anmeldung: **21.09.94 Patentblatt 94/38**

(84) Benannte Vertragsstaaten: **BE CH DE ES FR GB LI NL**

(71) Anmelder: **BASF Aktiengesellschaft**
**Carl-Bosch-Strasse 38**
**D-67063 Ludwigshafen (DE)**

(72) Erfinder: **Goetz, Walter, Dr.**
**Dhauner Strasse 79**
**D-67067 Ludwigshafen (DE)**
Erfinder: **Pipper, Gunter**
**Schlangenthaler Weg 10**
**D-67098 Bad Duerkheim (DE)**

## (54) Blockcopolyamide.

(57) Blockcopolymerisate, erhältlich durch Mischen einer Schmelze aus

A) 15 bis 85 Gew.-% eines amorphen Polyamidpräpolymeren mit einer Viskositätszahl von 40 bis 100 ml/g mit einer Schmelze aus

B) 15 bis 85 Gew.-% eines teilkristallinen Polyamidpräpolymeren mit einer Viskositätszahl von 40 bis 100 ml/g

und

C) 0 bis 70 Gew.-% üblichen Zusatzstoffen und Verarbeitungshilfsmitteln in wirksamen Mengen,

und anschließender Nachkondensation in fester Phase, wobei die Gewichtsprozente der Komponenten A) bis C) zusammen 100 % ergeben.

EP 0 615 997 A1

Die Erfindung betrifft Blockcopolymerisate, erhältlich durch Mischen einer Schmelze aus

A) 15 bis 85 Gew.-% eines amorphen Polyamidpräpolymeren mit einer Viskositätszahl von 40 bis 100 ml/g

mit einer Schmelze aus

B) 15 bis 85 Gew.-% eines teilkristallinen Polyamidpräpolymeren mit einer Viskositätszahl von 40 bis 100 ml/g

und

C) 0 bis 70 Gew.-% üblichen Zusatzstoffen und Verarbeitungshilfsmitteln in wirksamen Mengen,

und anschließender Nachkondensation in fester Phase, wobei die Gewichtsprozente der Komponenten A) bis C) zusammen 100 % ergeben.

Außerdem betrifft die Erfindung Verfahren zur Herstellung der erfindungsgemäßen Blockcopolyamide, deren Verwendung zur Herstellung von Formkörpern durch Blasformen, Rohrextrusion und Profilextrusion sowie die hierbei erhältlichen Formkörper insbesondere Folien und Schlauchfolien.

Blockcopolyamide, welche durch anionische Lactampolymerisation in Gegenwart von Oligoamiden hergestellt werden, sind u.a. aus der DE-A 26 47 309 bekannt.

Mischungen (Blends) aus amorphen und teilkristallinen Polyamiden sind aus der EP-A 70 001 und EP-A 400 428 bekannt. Entsprechende zähmodifizierte Polyamidblends sind aus der EP-A 73 036 bekannt.

Aus der EP-A 287 839 sind Formkörper (Verbundkörper) mit verbesserten Barriereeigenschaften bekannt, welche Mischungen aus amorphen und teilkristallinen Polyamiden enthalten.

Für die Herstellung von Folien werden üblicherweise Polyolefine verwendet, welche eine gute Wasserdichtheit und Zähigkeit aufweisen, jedoch eine hohe Sauerstoffpermeabilität. Diese Folien sind für Anwendungen im Lebensmittelverpackungsbereich entsprechend nicht geeignet. Insofern werden in diesem Verpackungsbereich entweder aufkaschierte Aluminiumlagen gleichzeitig verwendet (teure Verarbeitung und nicht recyclinfähig) oder Verbundfolien aus Polyolefinen mit einem sauerstoffdichten Material (wie Polyamiden) und einem Haftvermittler aus Ethylen-Acrylsäurecopolymeren. Ein üblicher Schichtaufbau solcher Folien besteht z.B. aus PE-EAS-PA-EAS-PE.

Die Sauerstoffpermeabilität von teilkristallinen Polyamiden wie PA 6 oder PA 66 ist in einem großen Maße von der Feuchtigkeit abhängig. Bei einer Luftfeuchtigkeit von 80 % sind Folien wegen der hohen Sauerstoffpermeabilität nicht mehr anwendbar. Zusätzlich zeigen teilkristalline Polyamide für diese Anwendungen eine zu geringe Transparenz.

Amorphe Polyamide, insbesondere mit aromatischen Bausteinen, zeigen zwar eine niedrige und von der Luftfeuchtigkeit unabhängige Sauerstoffpermeabilität und eine von der Schichtdicke und den Verarbeitungsparametern unabhängige hohe Transparenz auf, sind aber schwer herstellbar und schwer zu verarbeiten. Temperung in fester Phase zur Erreichung des notwendigen Molekulargewichtes ist nicht möglich (Verkleben oberhalb der Glastemperatur) und Schmelzkondensation führt leicht zu Stippenbildung, welche für Folienanwendungen nicht akzeptabel sind. Das erreichbare Molekulargewicht ist deshalb begrenzt und folglich die mechanischen Eigenschaften. Bei der Verarbeitung neigen derartige Folien zum Kleben (Blocken), so daß diese nur schwer von Rollen abgespult werden können.

Blends aus amorphen und teilkristallinen Polyamiden mit normalen Molekulargewicht weisen ebenfalls eine unzureichende Sauerstoffpermeabilität für Folienanwendungen auf und sind in den mechanischen Eigenschaften und der Verarbeitung (durch das Molekulargewicht der amorphen Polyamide) verbesserungswürdig.

Der vorliegenden Erfindung lag daher die Aufgabe zugrunde, Blockcopolyamide zur Verfügung zu stellen, welche in möglichst breiten Mengenverhältnissen der einzelnen Blöcke in höheren Molekulargewichten herstellbar sind und eine gute Verarbeitung zu Formkörpern ermöglichen. Insbesondere sollen die Blockcopolyamide zur Herstellung hochbeanspruchbarer Folien, Profilextrudaten und Rohrextrudaten geeignet sein, wobei die Folien eine sehr geringe Sauerstoffpermeabilität - auch bei hoher Luftfeuchtigkeit - und die notwendige Transparenz aufweisen sollen. Ferner sollen die Folien gut handhabbar sein (geringes Kleben).

Diese Aufgabe wird erfindungsgemäß durch die eingangs definierten Blockcopolyamide gelöst.

Bevorzugte Ausführungsformen sind den Unteransprüchen zu entnehmen.

Weiterhin wurden Verfahren zur Herstellung dieser Blockcopolyamide, deren Verwendung zur Herstellung von Formkörpern sowie die hierbei erhältlichen Folien, Profilextrudate und Rohrextrudate gefunden.

Als Komponente A) enthalten die erfindungsgemäßen Blockcopolyamide 15 bis 85, bevorzugt 50 bis 85 und insbesondere 60 bis 80 Gew.-% eines amorphen Polyamidpräpolymeren mit einer Viskositätszahl von 40 bis 100 ml/g, bevorzugt 40 bis 90 ml/g und insbesondere 50 bis 80 ml/g, gemessen an einer 0,5 gew.-%igen Lösung in konzentrierter Schwefelsäure bei 23 °C.

Als aromatische Dicarbonsäuren zur Herstellung der Komponente A) der erfindungsgemäßen Formmassen eignen sich im allgemeinen solche mit 8 bis 20 C-Atomen, vorzugsweise 8 bis 14 C-Atomen. Besonders geeignet sind einkernige, in meta- oder para-Stellung Carboxylgruppen tragende Dicarbonsäuren, vor allem Isophthalsäure. Geringere Mengen (< 30 %) der Dicarbonsäuren können parasubstituiert sein, wobei Terephthalsäure bevorzugt ist.

Weitere aromatische Dicarbonsäuren sind beispielsweise 2,6-Pyridindicarbonsäure, 1,4-Naphthalindicarbonsäure, 1,5-Naphthalindicarbonsäure, 2,6-Naphthalindicarbonsäure und 3,3-, 3,4- oder 4,4-Diphenylsulfondicarbonsäure. Es können auch Mischungen von zwei oder mehreren aromatischen Dicarbonsäuren eingesetzt werden, wobei Mischungen aus Isophthalsäure mit Terephthalsäure bevorzugt sind.

Als geradkettige oder verzweigte aliphatische oder cycloaliphatische Diamine eignen sich im allgemeinen solche mit 4 bis 20 C-Atomen, vorzugsweise 6 bis 12 C-Atomen. Besonders bevorzugt ist hierbei Hexamethylendiamin sowie dessen alkylsubstituierte Derivate wie 2,2,4-Trimethylhexamethylendiamin, 2,2,5-Trimethylhexamethylendiaminund tetramethylsubstituierte Hexamethylendiamine.

Als Diamine kommen weiterhin in Betracht: Tetramethylendiamin, Pentamethylendiamin, 2-Methylpentamethylendiamin, 2-Methylhexamethylendiamin, 3-Methylhexamethylendiamin, 3,4-Dimethylhexamethylendiamin, 2,4,4-Trimethylhexamethylendiamin, 2-Methyl-4-ethylheptamethylendiamin, Octamethylendiamin, Nonamethylendiamin, Decamethylendiamin, Undecamethylendiamin und Dodecamethylendiamin sowie Diamine der allgemeinen Formel

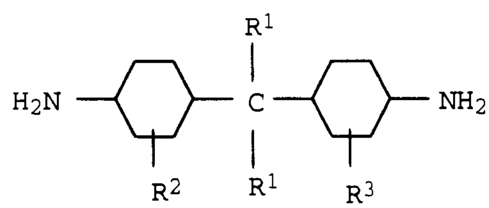 ,

in der $R^1$ Wasserstoff oder die Methylgruppe bedeutet und in der $R^2$ und $R^3$ Wasserstoff oder eine $C_1$-$C_4$-Alkylgruppe bedeutet. Bevorzugte Alkylgruppen sind die Ethylengruppe und vor allem die Methylgruppe.

Es können auch Mischungen von zwei oder mehreren Diaminen eingesetzt werden.

Bevorzugt sind Mischungen, welche als wesentliche Bausteine enthalten:

$a_1$) 70 bis 100, bevorzugt 80 bis 99 Gew.-% Einheiten, die sich von Hexamethylendiamin und Isophthalsäure ableiten und

$a_2$) 0 bis 30, bevorzugt 1 bis 20 Gew.-% Einheiten, die sich von Hexamethylendiamin und Terephthalsäure ableiten.

Die Herstellung der Polyamide A) erfolgt im allgemeinen sowohl diskontinuierlich als auch kontinuierlich, vorzugsweise jedoch durch kontinuierliche Polykondensationsverfahren wie sie in den EP-A 129 195 und 129 196 als Methode zur Herstellung der Präpolyamide beschrieben sind (siehe Komponente B)).

Als Komponente B) enthalten die erfindungsgemäßen thermoplastischen Formmassen 15 bis 85 Gew.-%, bevorzugt 15 bis 50 Gew.-%, insbesondere 20 bis 40 Gew.-% eines teilkristallinen Polyamid-Präpolymeren mit einer Viskositätszahl von 40 bis 80 ml/g, bevorzugt 45 bis 60 ml/g, gemessen an einer 0,5 gew.-%igen Lösung in konzentrierter Schwefelsäure bei 23 °C.

Geeignete Polyamide können z.B. durch Kondensation äquimolarer Mengen einer gesättigten oder aromatischen Dicarbonsäure mit 4 bis 12 Kohlenstoffatomen mit einem Diamin, welches 4 bis 14 Kohlenstoffatome aufweist oder durch Kondensation von $\omega$-Aminocarbonsäuren oder Polyaddition von Lactamen hergestellt werden.

Beispiele für Polyamide sind Polyhexamethylenadipinsäureamid, Polyhexamethylenazelainsäureamid, Polyhexamethylensebacinsäureamid, Polyhexamethylendodecandisäureamid, Polytetramethylenadipinsäureamid und die durch Ringöffnung von Lactamen erhaltenen Polyamide wie Polycaprolactam und Polylaurinsäurelactam.

In der Regel sind diese teilkristallinen Polyamide linear.

Besonders bevorzugt sind Polytetramethylenadipinsäureamid, Polyhexamethylenadipinsäureamid, Polyhexamethylensebacinsäureamid und Polycaprolactam sowie Copolyamide aus Terephthalsäure, Hexamethylendiamin und $\epsilon$-Caprolactam oder aus Terephthalsäure, Isophthalsäure, ggf. Adipinsäure und Hexamethylendiamin mit mehr als 50 Gew.-% Terephthalsäure/Hexamethylendiamin-Einheiten; insbesondere Polyhexamethylenadipinsäureamid und Polycaprolactam. Es können jedoch auch Mischungen verschiedener Polyamide verwendet werden.

Die Herstellung der Polyamid-Präpolymeren mit einer Viskositätszahl von 40 bis 80 ml/g (Komponente B) kann nach den in den EP-A 129 195 und 129 196 beschriebenen Verfahren erfolgen.

Gemäß diesen Verfahren wird eine wäßrige Lösung der Monomeren unter erhöhtem Druck und unter gleichzeitiger Verdampfung von Wasser und Bildung eines Präpolymeren auf eine Temperatur von 250 bis 350 °C erhitzt, anschließend werden Präpolymere und Dampf kontinuierlich getrennt, der Dampf rektifiziert und die mitgeführten. Diamine zurückgeleitet. Schließlich wird das Präpolymer in eine Polykondensationszone geleitet und unter Druck bei einer Temperatur von 250 bis 350 °C polykondensiert. Wesentlich ist bei dem Verfahren, daß die wäßrige Salzlösung unter einem Überdruck von 1 bis 10 bar innerhalb einer Verweilzeit von weniger als 60 Sekunden erhitzt wird, wobei bei Austritt aus der Verdampferzone der Umsetzungsgrad vorteilhaft mindestens 93 % und der Wassergehalt des Präpolymeren höchstens 7 Gew.-% beträgt.

Durch diese kurzen Verweilzeiten wird die Bildung von Triaminen weitgehend verhindert.

Die verwendeten wäßrigen Lösungen haben in der Regel einen Monomergehalt von 30 bis 70 Gew.-%, insbesondere von 40 bis 65 Gew.-%.

Die Verdampferzone ist vorteilhaft als Röhrenbündel ausgebildet.

Ferner hat es sich als vorteilhaft erwiesen, das Gemisch aus Präpolymeren und Dampf vor der Trennung der Phasen unmittelbar nach der Verdampferzone durch eine mit Füllkörpern versehene Stoffaustauschzone, zu leiten. Hierbei hält man die in der Verdampferzone angewandten Temperaturen und Druckbedingungen ein. Die Füllkörper wie Raschigringe, Metallringe oder insbesondere Füllkörper aus Drahtnetz, bewirken eine große Oberfläche. Hierdurch werden die Phasen, d.h. Präpolymeres und Dampf, innig in Berührung gebracht. Dies bewirkt, daß die Menge des mit Wasserdampf freigesetzten Diamins erheblich vermindert wird.

Das aus der Verdampferzone bzw. Stoffaustauschzone austretende zweiphasige Gemisch aus Dampf und Präpolymeren wird getrennt und die Brüden werden in eine Kolonne geleitet und rektifiziert. Die Kolonne wird zweckmäßig unter den identischen Druckbedingungen wie die Verdampferzone betrieben. Die in den Brüden enthaltenen Diamine werden hierbei abgetrennt und wieder der Verdampferzone zugeführt; der anfallende rektifizierte Wasserdampf wird am Kopf der Kolonne entnommen.

Das erhaltene Präpolymere, das entsprechend seinem Umsetzungsgrad im wesentlichen aus niedermolekularem Polyamid und gegebenenfalls restlichen Mengen an nicht umgesetzten Salzen besteht, wird in eine Polymerisationszone geleitet. In der Polymerisationszone wird die anfallende Schmelze bei einer Temperatur von 250 bis 350 °C, insbesondere 270 bis 330 °C unter Druck polykondensiert. Vorteilhaft werden die hierbei freiwerdenden Dämpfe zusammen mit den obengenannten Brüden in der Kolonne rektifiziert. Das so erhaltene Polyamid-Präpolymere, das in der Regel eine Viskositätszahl von 40 bis 100 ml/g, bevorzugt von 40 bis 80 ml/g und insbesondere von 45 bis 60 ml/g, gemessen an einer 0,5 gew.-%igen Lösung in 96 %iger Schwefelsäure bei 23 °C, aufweist, wird kontinuierlich aus der Kondensationszone entnommen.

Vorzugsweise wiesen die teilkristallinen Polyamid-präpolymeren einen Kristallinitätsgrad von mindestens 40, bevorzugt 45 % auf. Der Kristallinitätsgrad ist ein Maß für den Anteil an kristallinen Fragmenten im Polyamid und wird durch Röntgenbeugung` oder indirekt durch Messung der Schmelzenthalpie bestimmt.

Als Komponente C) können die erfindungsgemäßen thermoplastischen Formmassen übliche Zusatzstoffe und Verarbeitungshilfsmittel wie Stabilisatoren, Oxidationsverzögerer, Mittel gegen Wärmezersetzung und Zersetzung durch ultraviolettes Licht, Gleit- und Entformungsmittel, Färbemittel wie Farbstoffe und Piomente, faser- und pulverförmige Füll- und Verstärkungsmittel, Kautschuke (Zähmodifier), Keimbildungsmittel, Weichmacher usw. enthalten, deren Anteil in der Regel nicht mehr als 70 Gew.-% bevorzugt nicht mehr als 40 Gew.-% beträgt.

Als Beispiele für Oxidationsverzögerer und Wärmestabilisatoren sind Halogenide von Metallen der Gruppe I des periodischen Systems, z.B. Natrium-, Kalium- und/oder Lithiumnalogenide, ggf. in Verbindung mit Kupfer-(I)-Halogeniden, z.B. Chloriden, Bromiden, Jodiden, sterisch gehinderte Phenole, Hydrochinone, aromatische sekundäre Amine wie Diphenylamine, verschiedene substituierte Vertreter dieser Gruppen und deren Mischungen in Konzentrationen bis zu 1 Gew.-%, bezogen auf das Gewicht der thermoplastischen Formmasse genannt.

Als UV-Stabilisatoren, die im allgemeinen in Mengen bis zu 2 Gew.-%, bezogen auf die Formmasse, verwendet werden, seien verschiedene substituierte Resorcine, Salicylate, Benzotriazole und Benzophenone genannt.

Weiterhin können organische Farbstoffe wie Nigrosin, Pigmente wie Titandioxid, Cadmiumsulfid, Cadmiumselenid, Phthalocyanine, Ultramarinblau und Ruß als Farbstoffe zugesetzt werden, sowie faser- und pulverförmige Füllstoffe und Verstärkungsmittel. Beispiele für letztere sind Kohlenstoffasern , Glasfasern,

amorphe Kieselsäure, Asbest, Calciumsilicat (Wollastonit), Aluminiumsilicat, Magnesiumcarbonat, Kaolin, Kreide, gepulverter Quarz, Glimmer und Feldspat. Der Anteil derartiger Füll- und Farbstoffe beträgt im allgemeinen bis zu 50 Gew.-%, bevorzugt 20 bis 35 Gew.-%.

Als Keimbildungsmittel können z.B. Talkum, Calciumfluorid, Natriumphenylphosphinat, Aluminiumoxid, Siliciumdioxid und Nylon 22 eingesetzt werden.

Gleit- und Entformungsmittel, welche in der Regel in Mengen bis zu 1 Gew.-% eingesetzt werden können, sind z.B. langkettige Fettsäuren wie Stearinsäure oder Behensäure, deren Salze (z.B. Ca- oder Zn-Stearat) oder Ester (z.B. Stearylstearat oder Pentaerythrittetrastearat) sowie Amidderivate (z.B. Ethylendisstearylamid). Zur besseren Folienverarbeitung können in Mengen bis zu 0,1 Gew.-% Antiblockmittel auf mineralischer Basis den erfindungsgemäßen Formmassen zugesetzt werden. Als Beispiele seien amorphe oder kristalline Kieselsäure, Calciumcarbonat oder Aluminiumsilikat genannt.

Als Beispiele für Weichmacher seien Phthalsäuredioctylester` Phthalsäuredibenzylester, Phthalsäurebutylbenzylester` Kohlenwasserstofföle, N-(n-Butyl)benzolsulfonamid und o- und p-Tolylethylsulfonamid genannt.

Zur weiteren Verbesserung der Schwerentflammbarkeit können alle für Polyamide bekannten Flammschutzmittel zugegeben werden, insbesondere solche auf Basis von Phosphorverbindungen bzw. roter Phosphor selbst.

Die Herstellung der erfindungsgemäßen Blockcopolyamide erfolgt vorzugsweise durch Aufschmelzen der Komponenten A und B, bevorzugt in einem Doppelschneckenextruder, und Vermischen bei Temperaturen von 5 bis 50 °C über dem Schmelzpunkt der Komponente B, sowie anschließende Festphasennachkondensation. Die weiteren Zusatzstoffe C können entweder vor dem Aufschmelzen - d.h. zur Mischung der granulatförmigen Komponenten A und B - oder durch eine unterhalb des Aufschmelzbereiches liegende Öffnung des Extruders zu den schmelzeförmigen bereits vermischten Komponenten A und B zugefügt werden. Im Falle von Glasfasern und mineralischen Füllstoffen ist letzteres bevorzugt.

In einer besonders bevorzugten Ausführungsform ist es auch möglich, die Komponente B im Austragsextruder der Herstellanlage der Komponente A zuzumischen, wobei dieser zweckmäßigerweise mit geeigneten Mischelementen wie Knetblöcken oder Zahnscheiben ausgerüstet sein muß, so daß der Extruder neben Entgasung und Austrag der Komponente A auch die Vermischung mit Komponente B bewirkt. Neben der Einsparung eines Verfahrensschrittes erspart diese Ausführungsform auch die Isolierung der Komponente A, die aufgrund ihres amorphen Charakters schwer zu verstrangen und zu granulieren ist und nach dem Granulieren, vor allem beim Trocknen von anhaltenden Wasser-Resten zum zusammenbakken und verkleben neigt.

Die Zusatzstoffe C können dabei wiederum vor oder nach dem Vermischen der Komponenten A und B zugemischt werden, wobei im Fall von faser- oder teilchenförmigen Füll- und Verstärkungsmitteln die Zugabe nach der Vermischung von A und B bevorzugt ist.

Die Blockcopolyamide unterwirft man danach in der Regel einer weiteren thermischen Behandlung. In Temperaggregaten wie z.B. einem Taumler-Mischer oder kontinuierlich oder diskontinuierlich betriebenen Temperrohren tempert man die in der jeweiligen Bearbeitungsform vorliegende Formmasse, bis die Viskositätszahl des Polyamids die gewünschte VZ von mindestens 120 ml/g und darüber erreicht. Der Temperaturbereich der Temperung hängt vom Schmelzpunkt der reinen Komponente B) ab. Bevorzugte Temperaturbereiche sind 5 bis 50, vorzugsweise 20 bis 30 °C unterhalb des jeweiligen Schmelzpunkts von B). Das erfindungsgemäße Verfahren erfolgt vorzugsweise in einer Inertgasatmosphäre, wobei Stickstoff und überhitzter Wasserdampf als Inertgase bevorzugt sind.

Die Verweilzeiten betragen im allgemeinen von 0,5 bis 50, vorzugsweise 4 bis 20 Stunden. Die Temperung bietet keine Probleme, so daß das eingesetzte Blockcopolyamid auf beliebige Molekulargewichte aufgebaut werden kann.

Die Viskositätszahl, gemessen an einer 0,5 gew.-%igen Lösung in 90 %iger Schwefelsäure bei 23 °C beträgt nach der Nachkondensation in fester Phase im allgemeinen mindestens 120, bevorzugt 130 bis 250 und insbesondere 140 bis 200 ml/g.

Anschließend werden aus den Formmassen mittels üblicher Vorrichtungen für das Blasformen, Profilextrusion und Rohrextrusion Formteile hergestellt.

Die Blockcopolyamide zeichnen sich durch eine gute Verarbeitbarkeit und problemlose Herstellung aus und sind trotz Anwesenheit einer kristallinen Phase transparent. Folien aus den erfindungsgemäßen Blockcopolyamiden weisen eine geringe Sauerstoffpermeabilität insbesondere bei hoher Luftfeuchtigkeit auf und sind insbesondere als Verpackungsfolien insbesondere Coextrusionsfolien für Lebensmittel geeignet.

Weitere Anwendungen sind große Behälter, welche durch Blasformen herstellbar sind sowie die Extrusion von rohrförmigen Formkörpern.

Beispiele

Komponente A

Ein amorphes Polyamid-Präpolymer, hergestellt nach dem in der EP-A 129 195 beschriebenen Verfahren, wobei eine 65 %ige wäßrige Lösung eines äquimolaren Isophthalsäure/Hexamethylendiamin-Salzes kontinuierlich in einem Rohrbündelreaktor mit einem Durchsatz entsprechend einer Polyamidmenge von 8 kg/h bei einer Temperatur von 310 °C und einem Druck von 8 bar polykondensiert wurde. Das Produkt wies eine Viskositätszahl von 80 ml/g auf, gemessen an einer 0,5 gew.-%igen Lösung in konzentrierter Schwefelsäure bei 23 °C.

Komponente B/1

Ein teilkristallines Polyamid-Präpolymeres, hergestellt nach dem in der EP-A 129 195 beschriebenen Verfahren, wobei eine 65 %ige wäßrige Lösung eines äquimolaren Adipinsäure/Hexamethylendiamin-Salzes kontinuierlich in einem Rohrbündelreaktor mit einem Durchsatz entsprechend einer Polyamidmenge von 10 kg/h bei einer Temperatur von 292 °C und einem Druck von 8 bar polykondensiert wurde. Das Produkt wies eine Viskositätszahl von 70 ml/g auf.

Komponente B/2

Ein teilkristallines Copolyamid-Präpolymeres aus 70 Gew.-% Einheiten, die sich von Terephthalsäure/Hexamethylendiamin ableiten und 30 Gew.-% Einheiten, die sich von ε-Caprolactam ableiten, hergestellt nach dem in der EP-A 129 195 beschriebenen Verfahren, wobei eine 65 %ige wäßrige Lösung von Caprolactam und eines äquimolaren Terephthalsäure/Hexamethylendiamin-Salzes kontinuierlich in einem Rohrbündelreaktor mit einem Durchsatz entsprechend einer Polyamidmenge von 8 kg/h bei einer Temperatur von 315 °C und einem Druck von 8 bar polykondensiert wurde. Das Produkt wies eine Viskositätszahl von 78/ml/g auf.

Komponente B/1V

PA 66 mit einer Viskositätszahl von 151 ml/g (Ultramid® A3 der BASF AG).

Beispiele 1 bis 6

In einem Doppelschneckenextruder (ZSK 25 von Werner & Pfleiderer) wurde die teilkristalline Komponente B aufgeschmolzen. In den 2. Schuß des Extruders, wo die Komponente A schon aufgeschmolzen vorlag, wurde die schmelzflüssige Komponente A aus dem Abscheidegefäß der Polykondensationsapparatur eingepreßt. Im weiteren Verlauf des Extruders wurden die Komponenten durch Knetblöcke bei 300 °C innig vermischt.

Anschließend wurde durch Anlegen von Vakuum entgast und das Produkt als Strang ausgetragen, gekühlt und granuliert.

Anschließend wurden die Produkte in fester Phase in einem feststehenden Temperrohr (doppelwandiges, von außen mit Öl auf Temper-Temperatur beheiztes Glasrohr von 120 mm Innendurchmesser und 1000 mm Länge, das mit 120 l/min überhitztem Wasserdampf durchströmt ist) bei 180 °C diskontinuierlich auf die in Tab. 1 angegebene Viskositätszahl getempert. Die Verweilzeit betrug 6 bis 12 h.

Beispiele 1V bis 6V

1V:

Komponente A (ohne B) wurde als Schmelze ausgetragen, abgekühlt und granuliert. Die Nachkondensation (auf eine höhere Viskositätszahl) war nicht möglich, da das Produkt verklebte. Die mechanischen Eigenschaften sind unbefriedigend.

2V:

Komponente A (ohne B) wurde durch Schmelznachkondensation in einem Zweischneckenextruder (ZSK 30, Werner & Pfleiderer) bei 300 °C und 5 kg/h Durchsatz sowie 200 U/min auf eine VZ von 125 ml/g kondensiert. Das Produkt ist stippenhaltig und schlecht verarbeitbar, die mechanischen Eigenschaften sind nicht zufriedenstellend.

3V:

Die Herstellung erfolgte analog den Beispielen 1 bis 6, jedoch außerhalb des Mengenbereiches gemäß Anspruch 1. Die Nachkondensation auf eine höhere Viskositätszahl war nicht möglich, da das Produkt verklebte; die Mechanik ist nicht zufriedenstellend.

4V:

Die Herstellung erfolgte analog den Beispielen 1 bis 6, wobei jedoch statt des teilkristallinen Präpolymeren B, Komponente B/1V (höhere VZ) eingesetzt wurde. Die Transparenz des Produktes ist geringer als bei entsprechenden Mengen B1 (siehe Beispiele 1 und 2).

5V und 6V:

Komponente B/1V bzw. B/2 (ohne Komponente A) wurden als Schmelze ausgetragen und granuliert. Beispiel 5V zeigt eine hohe Wasseraufnahme und hohe $O_2$-Permeabilität, insbesondere nach Feuchtigkeitsaufnahme. Beispiel 6V zeigt verringerte mechanische Eigenschaften und erhöhte $O_2$-Permeabilität nach Feuchtigkeitsaufnahme.

7V:

In einem Zweiwellenextruder (ZSK 30 von Werner & Pfleiderer) wurden bei 300 °C, 20 kg/h Durchsatz und 200 U/min die durch Schmelzkondensation auf höhere VZ kondensierte Komponente A (siehe Beispiel 2V, Komponente A') mit Komponente B/1V vermischt. Eine Festphasennachkondensation erfolgte nicht. Das Produkt war stippenhaltig und zeigte schlechte mechanische Eigenschaften; die Transparenz war - wie in Beispiel 4V - schlechter als bei der Verwendung entsprechender Mengen der niederviskosen Komponente B1 (siehe Beispiele 1 und 2).

Auf einer Spritzgußmaschine wurden bei 300 °C Prüfkörper hergestellt:
Die Zähigkeit wurde durch Messung der Durchstoßarbeit $W_{ges}$ im Plastechon-Test nach DIN 53 443 an bei 300 °C gespritzten, 2 X 60 mm großen Rundscheiben ermittelt.

Die Reißdehnung wurde im Zugversuch nach DIN 54 455 (Normprüfkörper) bestimmt. Die Transmission wurde als Lichtdurchlässigkeit an 2 x 60 mm großen Rundscheiben nach DIN 5 036 Teil 3 bestimmt.

Die Wasseraufnahme wurde als Gewichtszunahme nach 30 Tagen Wasserlagerung von Rundscheiben bei 23 °C bestimmt.

Die Sauerstoff-Permeation wurde nach ASTM D3985-81 in ml $O_2$ pro $m^2$ Tag und bar bei 23 °C und verschiedenen Feuchtigkeiten bestimmt (Meßapparatur Fa. Mocon).

Die Zusammensetzungen der Blockcopolyamide und die Ergebnisse der Messungen sind der Tabelle zu entnehmen.

Tabelle

| Bsp. | Zusammensetzung [Gew.-%] | VZ [ml/g] nach Tempern | $W_{ges}$ [kJ/m²] | Dehnung [%] | Transparenz [%] | $O_2$ Permeabilität [ml/m²·d·bar) trocken | feucht | $H_2O$-Aufnahme [%] |
|---|---|---|---|---|---|---|---|---|
| 1 | 75 A 25 B/1 | 125 | 59 | 87 | 83 | 4,4 | 4,6 | 4,2 |
| 2 | 75 A 25 B/1 | 168 | 80 | 152 | 84 | 4,2 | 4,6 | 4,1 |
| 3 | 50 A 50 B/1 | 145 | 95 | 101 | 73 | 4,5 | 6,5 | 4,4 |
| 4 | 25 A 75 B/1 | 151 | 105 | 98 | 68 | 5,8 | 9,8 | 4,9 |
| 5 | 75 A 25 B/2 | 135 | 44 | 56 | 86 | 4,2 | 4,4 | 3,5 |
| 6 | 50 A 50/B/2 | 128 | 50 | 50 | 84 | 4,3 | 4,3 | 3,8 |
| 1V | 100 A – | 70*) | 7 | 5,2 | 86 | 4,0 | 4,0 | 3,5 |
| 2V | 100 A – | 125**) | 35 | 23 | 85 | 4,2 | 4,4 | 3,5 |
| 3V | 90 A 10 B/1 | 68*) | 10 | 8,8 | 86 | 4,2 | 4,0 | 3,7 |
| 4V | 75 A 25 B/1V | 137 | 88 | 85 | 74 | 4,2 | 4,4 | 4,0 |
| 5V | – 100 B/1V | 148***) | 106 | 88 | 61 | 8,0 | 24,4 | 7,8 |
| 6V | – 100 B/2 | 130***) | 60 | 55 | 70 | 5,5 | 12,8 | 4,6 |
| 7V | 75 A' 25 B/1V | 142 | 40 | 17 | 70 | 4,5 | 5,0 | 4,2 |

*) nicht temperbar, verklebt beim Tempervorgang

**) in der Schmelze nachkondensiert, stippenhaltig, nicht folientauglich

***) ohne Nachkondensation in fester Phase

## Patentansprüche

1. Blockcopolymerisate, erhältlich durch Mischen einer Schmelze aus

A) 15 bis 85 Gew.-% eines amorphen Polyamidpräpolymeren mit einer Viskositätszahl von 40 bis 100 ml/g
mit einer Schmelze aus
B) 15 bis 85 Gew.-% eines teilkristallinen Polyamidpräpolymeren mit einer Viskositätszahl von 40 bis 100 ml/g
und
C) 0 bis 70 Gew.-% üblichen Zusatzstoffen und Verarbeitungshilfsmitteln in wirksamen Mengen,

und anschließender Nachkondensation in fester Phase, wobei die Gewichtsprozente der Komponenten A) bis C) zusammen 100 % ergeben.

**2.** Blockcopolyamide nach Anspruch 1, dadurch gekennzeichnet, daß das Blockcopolyamid nach der Nachkondensation in fester Phase eine Viskositätszahl von mindestens 120 ml/g aufweist.

**3.** Blockcopolyamide nach den Ansprüchen 1 oder 2, dadurch gekennzeichnet, daß die Komponente A) aus Polyhexamethylenisophthalat aufgebaut ist.

**4.** Blockcopolyamide nach den Ansprüchen 1 bis 3, dadurch gekennzeichnet, daß die Komponente B) einen Kristallinitätsgrad von mindestens 40 % aufweist.

**5.** Blockcopolyamide nach den Ansprüchen 1 bis 4, dadurch gekennzeichnet, daß die Komponente B) aus PA 66, PA 46, PA 6/6T oder deren Mischungen aufgebaut ist.

**6.** Verfahren zur Herstellung der Blockcopolyamide gemäß den Verfahrensbedingungen von Anspruch 1.

**7.** Verwendung der Blockcopolyamide gemäß den Ansprächen 1 bis 5 zur Herstellung von Formkörpern durch Blasformen, Profilextrusion, Folienextrusion oder Rohrextrusion.

**8.** Blasformkörper, erhältlich aus den Blockcopolyamiden gemäß den Ansprüchen 1 bis 5.

**9.** Folien, erhältlich aus den Blockcopolyamiden gemäß den Ansprüchen 1 bis 5.

**10.** Profil- und Rohrextrudate, erhältlich aus den Blockcopolyamiden gemäß den Ansprüchen 1 bis 5.

Europäisches Patentamt

# EUROPÄISCHER RECHERCHENBERICHT

Nummer der Anmeldung
EP 94 10 3349

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.5) |
|---|---|---|---|
| X | WO-A-91 13930 (DOW BENELUX)<br>* das ganze Dokument *<br>----- | 1-10 | C08G69/26<br>C08G69/36<br>C08G69/28 |

RECHERCHIERTE SACHGEBIETE (Int.Cl.5)
C08G

Der vorliegende Recherchenbericht wurde für alle Patentansprüche erstellt

| Recherchenort | Abschlußdatum der Recherche | Prüfer |
|---|---|---|
| DEN HAAG | 30. Juni 1994 | Leroy, A |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
.....................................................
& : Mitglied der gleichen Patentfamilie, übereinstimmendes Dokument

EPO FORM 1503 03.82 (P04C03)